# EUROPEAN PATENT SPECIFICATION

(11) **EP 3 054 774 B1**
(45) Date of publication and mention of the grant of the patent: **27.01.2021**
(21) Application number: 14852080.2
(22) Date of filing: 10.10.2014
(51) Int. Cl.: A01P 13/00, A01P 13/02, A01N 37/10, A01N 25/04, A01N 37/40, A01N 43/40, A01N 43/80, A01N 39/04

(54) **AQUEOUS HERBICIDAL CONCENTRATES**
WÄSSRIGE HERBIZIDE KONZENTRATE
CONCENTRÉS HERBICIDES AQUEUX

(30) Priority: 11.10.2013 US 201361889808 P
(43) Date of publication of application: 17.08.2016
(73) Proprietor: Dow AgroSciences LLC, Indianapolis, IN 46268 (US)
(72) Inventor: LI, Mei, Westfield, IN 46074 (US)
(74) Representative: f & e patent
(86) International application number: PCT/US2014/060013
(87) International publication number: WO 2015/054561

(56) References cited:
- WO-A1-96/28027
- WO-A1-2011/082162
- WO-A2-2011/113052
- US-A- 5 176 736
- US-A1- 2003 004 063
- US-A1- 2010 105 558
- US-A1- 2011 034 332
- US-A1- 2011 257 012
- US-A1- 2012 142 532

## Description

### I. BACKGROUND

High-strength, *e.g*., high concentration or high-load, formulations are desirable for a variety of economic and environmental reasons, including the reduction of shipping and handling costs. Liquid pre-mix concentrates containing two or more active ingredients are useful in a wide variety of agricultural applications. For example, two or more pesticidal active ingredients may be combined in order to control a wider spectrum of pests, or to utilize multiple modes of action, compared to the individual active ingredients alone.

Normally, water insoluble pesticide active ingredients are formulated in water with water soluble pesticides as aqueous suspension concentrates (SC) or by dissolving the water insoluble pesticide in an organic solvent and forming an oil-in-water emulsion (EW). The preparation of these liquid, pre-mix concentrates can be challenging owing to chemical and/or physical instability. Examples of physical instability with these compositions include, for example, phase separation, crystallization, settling, sedimentation, gelling, and agglomeration.

WO 2011/082162 A1 relates to pesticidal emulsifiable concentrates comprising, (a) a pesticide mixture comprising a major amount of a water-insoluble pesticide and a minor amount of a water-soluble pesticidal salt; (b) a solvent system comprising a major amount of an organic solvent comprising at least one non aqueous polar solvent and a minor amount of water.

US 2010/01505558 A1 relates to stable emulsifiable concentrates containing a first herbicidal carboxylic acid in the salt form and a second herbicidal carboxylic acid in the ester form prepared by using a tertiary amine to prepare the salt of the first herbicidal carboxylic acid and by using an alcohol which is the same as the ester portion of the second carboxylic acid herbicide as the solvent. Water soluble salts of pesticides, e.g., glyphosate salts, when dissolved in water form high ionic strength solutions that when combined with organic solutions containing oil-soluble pesticides normally form oil-in-water emulsions. These pre-mix, concentrate compositions, however, can be difficult to stabilize due to the high ionic strength of the aqueous phase and require the proper choice of surfactants and/or additional inert ingredients. Previous efforts to combine oil soluble herbicides with aqueous solutions containing salts of glyphosate in a liquid concentrate formulation have been disclosed, for example, in US 6,713,433 B2, US 6,689,719 and US 6,369,001.

WO 96/28027 A1 relates to homogeneous herbicidal compositions prepared by dissolving a water-insoluble ester of fluroxypyr or triclopyr in an aqueous solution of an alkali metal or amine salt of an herbicidal acid, such as 2,4-D, MCPA, or dicamba.

US 2003/0004063 A1 relates to coformulations comprising a water-soluble herbicide in a continuous aqueous phase and an oil-soluble herbicide in a discontinuous oil phase.

WO 2011/113052 A2 relates to compositions comprising at least one water-soluble pesticide and at least one non-herbicidal water-insoluble agrochemical for improving plant health.

US 2012/0142532 A1 relates to aqueous herbicidal solution concentrate formulations comprising a dicamba salt and optionally a co-herbicide.

Previous efforts to prepare stable, homogeneous, herbicidal compositions containing water soluble salts of carboxylic acid herbicides and water insoluble herbicides were severely limited in the choice, physical properties and/or loading of the water insoluble herbicide.

### II. SUMMARY

Provided herein are stable aqueous herbicidal compositions comprising:
a) a water soluble salt of a synthetic auxin herbicide comprising, with respect to the total composition, from 100 grams acid equivalent per liter (g ae/L) to 625 g ae/L;
b) a second herbicide comprising, with respect to the total composition, from 0.1 g ae/L to 400 g ae/L of a water insoluble herbicide;
c) from 0 g/L to 150 g/L, with respect to the total composition, of at least one of an ionic and/or a non-ionic surfactant;
d) from 0 g/L to 500 g/L, with respect to the total composition, of a water immiscible organic solvent; and
e) from 200 g/L to 800 g/L, with respect to the total composition, of water;
wherein the second herbicide includes a haloxyfop ester; a compound of the Formula 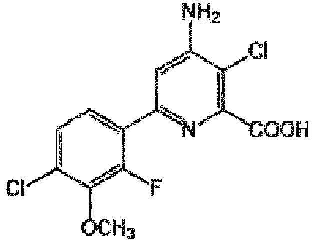 or a C₁-C₆ alkyl ester or salt thereof; or a compound having the following Formula 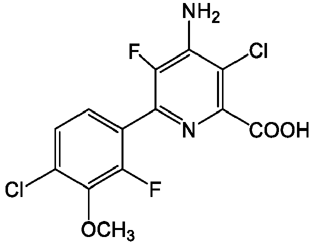 or a C₁-C₁₂ alkyl or C₇-C₁₂ arylalkyl ester or salt thereof; and
wherein the composition forms a stable, transparent, and homogenous herbicidal composition.

Also provided herein is a method of controlling undesirable vegetation comprising contacting the vegetation or an area adjacent thereto to prevent the emergence of growth of vegetation a herbicidally effective amount of a herbicidal composition comprising:
a) a water soluble salt of a synthetic auxin herbicide comprising, with respect to the total composition, from 100 g ae/L to 625 g ae/L;
b) a second herbicide comprising, with respect to the total composition, from 0.1 g ae/L to 400 g ae/L of a water insoluble herbicide;
c) from 0 g/L to 150 g/L, with respect to the total composition, of at least one of an ionic and/or a non-ionic surfactant;
d) from 0 g/L to 500 g/L, with respect to the total composition, of a water immiscible organic solvent; and
e) from 200 g/L to 800 g/L, with respect to the total composition, of water;
wherein the second herbicide includes a haloxyfop ester; a compound of the Formula 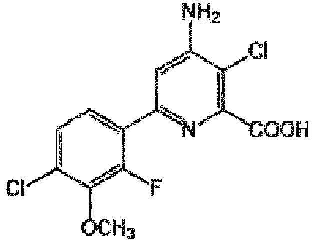 or a C₁-C₆ alkyl ester or salt thereof; or a compound having the following Formula 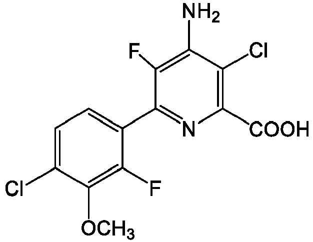 or a C₁-C₁₂ alkyl or C₇-C₁₂ arylalkyl ester or salt thereof; and
wherein the composition forms a stable, transparent, and homogenous herbicidal composition.

### III. DETAILED DESCRIPTION

The inventors herein have surprisingly found that combining an aqueous concentrate of a water soluble salt of a synthetic auxin herbicide such as, for example, 2,4-D with a water insoluble second herbicide selected from the ones described above, optionally dissolved in a organic solvent, provides a stable, transparent, and homogenous herbicidal composition that exhibits good storage stability even in the absence of any surfactants and readily forms a stable emulsion upon dilution into a spray solution of water.

Provided herein are stable aqueous herbicidal compositions comprising:
a) a water soluble salt of a synthetic auxin herbicide comprising, with respect to the total composition, from 100 grams acid equivalent per liter (g ae/L) to 625 g ae/L;
b) a second herbicide comprising, with respect to the total composition, from 0.1 g ae/L to 400 g ae/L of a water insoluble herbicide;
c) from 0 g/L to 150 g/L, with respect to the total composition, of at least one of an ionic and a non-ionic surfactant;
d) from 0 g/L to 500 g/L, with respect to the total composition, of a water immiscible organic solvent; and
e) from 200 g/L to 800 g/L, with respect to the total composition, of water;
wherein the second herbicide includes a haloxyfop ester; a compound of the Formula 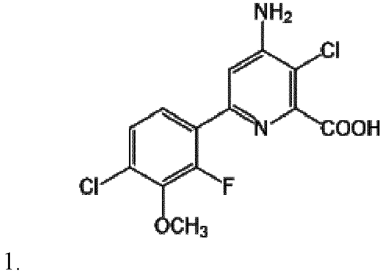 or a C₁-C₆ alkyl ester or salt thereof; or a compound having the following Formula 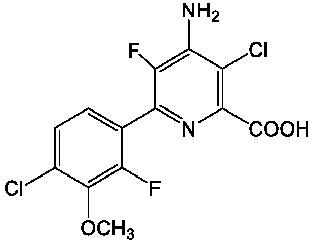 or a C₁-C₁₂ alkyl or C₇-C₁₂ arylalkyl ester or salt thereof; and
wherein the composition forms a stable, transparent, and homogenous herbicidal composition. These compositions also show no visible phase separation after storage at 54 °C for 2 weeks and/or no crystal formation after -10/40 °C freeze/thaw cycling conditions every 24 hours for 2 weeks.

In certain embodiments, the described compositions optionally include additional active ingredients and/or inert formulation ingredients.

In certain embodiments, the described compositions include a second herbicide that is a liquid or solid at ambient temperature.

In certain embodiments, the described compositions that include a liquid second herbicide do not include an organic solvent.

In certain embodiments, the described aqueous herbicide compositions form stable emulsions upon dilution into a spray solution containing water.

Also provided herein are methods of controlling undesirable vegetation comprising contacting the vegetation or an area adjacent thereto to prevent the emergence of growth of vegetation a herbicidally effective amount of a herbicidal composition comprising:
a) a water soluble salt of a synthetic auxin herbicide comprising, with respect to the total composition, from 100 g ae/L to 625 g ae/L;
b) a second herbicide comprising, with respect to the total composition, from 0.1 g ae/L to 400 g ae/L;
c) from 0 g/L to 150 g/L, with respect to the total composition, of at least one of an ionic and/or a non-ionic surfactant;
d) from 0 g/L to 500 g/L, with respect to the total composition, of a water immiscible organic solvent; and
e) from 200 g/L to 800 g/L, with respect to the total composition, of water;
wherein the second herbicide includes a haloxyfop ester; a compound of the Formula 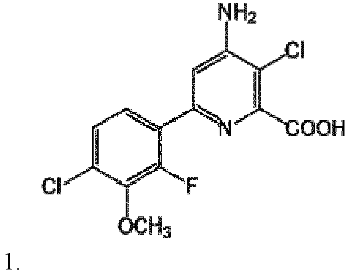 or a C₁-C₆ alkyl ester or salt thereof; or a compound having the following Formula 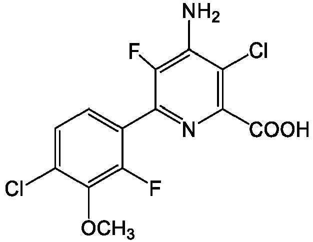 or a C₁-C₁₂ alkyl or C₇-C₁₂ arylalkyl ester or salt thereof; and
wherein the composition forms a stable, transparent, and homogenous herbicidal composition.

### A. Water Soluble Salts of Synthetic Auxin Herbicides

The term "water-soluble" in relation to a herbicide or a salt thereof as used herein means having solubility in deionized water at 20 °C sufficient to enable the water-soluble active ingredient to be dissolved completely in the aqueous phase of a composition at the desired concentration. In some embodiments, the water-soluble active ingredients useful in the compositions described herein have solubility in deionized water at 20 °C of not less than 50 g/L or not less than 200 g/L.

Synthetic auxin herbicides useful with the methods and compositions described herein include, for example, 2,4-D (2,4-dichlorophenoxyacetic acid), 2,4-DB (4-(2,4-dichlorophenoxy)butyric acid), aminocyclopyrachlor, aminopyralid, clopyralid, dicamba, MCPA, MCPB, picloram, triclopyr, or mixtures thereof.

The water-soluble salts of the synthetic auxin herbicides contained in the aqueous compositions described herein include, e.g., salts containing one or more cations selected from the class of organo ammonium cations, wherein the organo ammonium cations may have from 1 to 12 carbon atoms. Exemplary organo ammonium cations include, for example, isopropyl ammonium, diglycol ammonium (2-(2-aminoethoxy)ethanol ammonium), dimethyl ammonium, diethyl ammonium, triethyl ammonium, monoethanol ammonium, dimethylethanol ammonium, diethanol ammonium, triethanol ammonium, triisopropanol ammonium, tetramethyl ammonium, tetraethylammonium, *N*,*N*,*N*-trimethylethanol ammonium (choline), and N,N-bis-(3-aminopropyl)methyl ammonium (BAPMA).

In some embodiments, the water-soluble salts of the synthetic auxin herbicides contained in the aqueous compositions described herein include, *e.g*., salts containing one or more cations selected from inorganic cations such as, for example, sodium and/or potassium. In certain embodiments, the water-soluble salt of the synthetic auxin herbicide is 2,4-D dimethyl ammonium or 2,4-D *N*,*N*,*N*-trimethylethanol ammonium (choline). In certain embodiments, the water-soluble salt of the synthetic auxin herbicide is a water soluble salt of aminopyralid, clopyralid, and/or dicamba. In certain embodiments, the water-soluble salt of the synthetic auxin herbicide is a water soluble salt of 2,4-D, MCPA, picloram, and/or triclopyr. In some embodiments the water-soluble salt of the synthetic auxin herbicide is dicamba dimethyl ammonium, dicamba diglycol ammonium, dicamba choline, dicamba N,N-bis-(3-aminopropyl)methyl ammonium (BAPMA), MCPA dimethyl ammonium, MCPA isopropyl ammonium, triclopyr triethyl ammonium, triclopyr dimethyl ammonium, and/or triclopyr choline.

In certain embodiments, the water soluble salt of the synthetic auxin herbicide comprises, with respect to the total composition, from 100 grams acid equivalent per liter (g ae/L) to 625 g ae/L, from 100 to 600 g ae/L, from 100 to 550 g ae/L, from 200 to 550 g ae/L, from 200 to 500 g ae/L, from 200 to 450 g ae/L, from 200 to 350 g ae/L, from 200 to 300 g ae/L, from 200 to 280 g ae/L or from 200 to 260 g ae/L. In certain embodiments, the water soluble salt of the synthetic auxin herbicide comprises, with respect to the total composition, from 100 to 450 g ae/L, from 100 to 400 g ae/L, from 100 to 350 g ae/L, from 100 to 300 g ae/L, from 100 to 250 g ae/L, from 100 to 200 g ae/L, or from 100 to 150 g ae/L. In certain embodiments, the water soluble salt of the synthetic auxin herbicide comprises, with respect to the total composition, from 250 to 550 g ae/L, from 300 to 550 g ae/L, from 300 to 525 g ae/L, from 350 to 525 g ae/L, from 400 to 525 g ae/L, from 450 to 525 g ae/L, from 480 to 510 g ae/L, from 350 to 500 g ae/L, from 340 to 450 g ae/L, from 340 to 400 g ae/L, from 340 to 380 g ae/L, from 300 to 400 g ae/L, from 300 to 380 g ae/L, from 300 to 360 g ae/L, from 310 to 350 g ae/L, or from 320 to 340 g ae/L.

The described aqueous compositions include at least one dissolved synthetic auxin herbicide salt, *e.g.*, 2,4-D dimethyl ammonium or 2,4-D choline. The water-soluble synthetic auxin herbicide active ingredient of the compositions described herein, *e.g.*, the herbicide 2,4-D dimethyl ammonium or 2,4-D choline, is present at a concentration in the composition as a whole sufficient, upon dilution of the composition in a suitable volume of water and applied by spraying to the target locus, to be herbicidally effective.

In some embodiments, the described compositions comprise from 200 to 625 g ae/L, from 200 to 575 g ae/L, from 200 to 525 g ae/L, from 200 to 475 g ae/L, from 200 to 425 g ae/L, from 200 to 375 g ae/L, from 200 to 350 g ae/L, from 200 to 300 g ae/L, from 200 to 280 g ae/L or from 220 to 260 g ae/L of 2,4-D dimethyl ammonium and/or 2,4-D choline.

In certain embodiments, the described compositions comprise from 250 to 625 g ae/L, from 300 to 625 g ae/L, from 300 to 575 g ae/L, from 300 to 525 g ae/L, from 350 to 525 g ae/L, from 400 to 525 g ae/L, from 450 to 525 g ae/L, from 480 to 510 g ae/L, from 350 to 625 g ae/L, from 350 to 575 g ae/L, from 350 to 525 g ae/L, from 350 to 475 g ae/L, from 340 to 450 g ae/L, from 340 to 400 g ae/L, from 340 to 380 g ae/L, from 300 to 400 g ae/L, from 300 to 380 g ae/L, from 300 to 360 g ae/L, from 310 to 350 g ae/L, or from 320 to 340 g ae/L of 2,4-D dimethyl ammonium and/or 2,4-D choline.

### B. Second Herbicide

A second herbicide, meaning a herbicide active ingredient other than a water-soluble salt of a synthetic auxin herbicide and which may exist as a solid or a liquid at ambient temperature, may be included in the aqueous compositions described herein, optionally with the use of a water immiscible organic solvent. In certain embodiments the second herbicide is generally insoluble in water alone which refers to having solubility in deionized water at 20 °C of not greater than 500 milligrams per liter (mg/L). In some embodiments the second herbicide has solubility in deionized water at 20 °C of not greater than 100 mg/L. In some embodiments the second herbicide has solubility in deionized water at 20 °C of not greater than 75 mg/L. In some embodiments the second herbicide has solubility in deionized water at 20 °C of not greater than 50 mg/L. In some embodiments the second herbicide has solubility in deionized water at 20 °C of not greater than 25 mg/L. In certain embodiments, the second herbicide is a solid having a melting point of not less than 25 °C. In certain embodiments, the second herbicide is a solid having a melting point of not less than 50 °C. In some embodiments, the second herbicide is a solid having a melting point of not less than 100 °C, and in other embodiments, the second herbicide is a solid having a melting point of not less than 150 °C.

The terms "liquid herbicide" or "liquid herbicide active ingredient," as used herein, refers to those herbicides or herbicide active ingredients that exist as liquids at normal ambient temperatures of 25 °C, which, stated another way, means they have melting points of less than 25 °C. The terms "non-liquid fluroxypyr ester" or "non-liquid triclopyr ester," as used herein, refers to those esters of fluroxypyr and triclopyr that exist as solids at normal ambient temperatures of 25 °C, which, stated another way, means they have melting points of not less than 25 °C. An example of a non-liquid fluroxypyr ester is fluroxypyr-meptyl. In some embodiments, the second herbicide is a liquid at ambient temperature. In some embodiments, the second herbicide is a liquid at ambient temperature and is present in the described compositions without the use of a water immiscible organic solvent.

In certain embodiments, the second herbicide for use in the described compositions is halauxifen-methyl, a haloxyfop ester, a haloxyfop-P ester, haloxyfop-P-methyl, and mixtures thereof.

In some embodiments the second herbicide for use in the described compositions includes compounds of the Formula 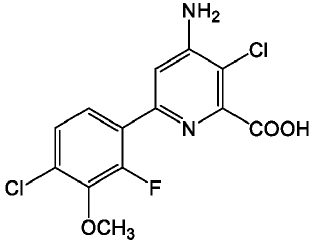 or a C₁-C₆ alkyl ester or salt thereof, e.g., the methyl ester, known as halauxifen-methyl or Arylex™ Active (trademark of Dow AgroSciences, LLC). In some embodiments, the second herbicide is a compound having the following Formula 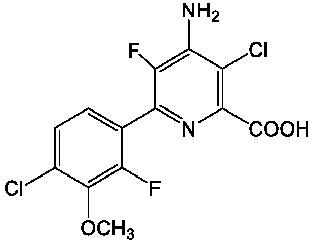 or a C₁-C₁₂ alkyl or C₇-C₁₂ arylalkyl ester or salt thereof, *e.g.*, the benzyl ester.

In certain embodiments, the second herbicide is a combination of halauxifen-methyl and fluroxypyr-meptyl. In certain embodiments, the second herbicide is a combination of isoxaben and halauxifen-methyl.

In certain embodiments, the described compositions include a liquid herbicide active ingredient, which is not a liquid triclopyr ester or a liquid fluroxypyr ester, as the second herbicide which may be used, optionally, with a water immiscible organic solvent.

In certain embodiments, the second herbicide is a liquid at ambient temperature and is selected from haloxyfop-methyl and/or haloxyfop-P-methyl. In certain embodiments, the second herbicide is a combination of halauxifen-methyl, and haloxyfop-methyl and/or haloxyfop-P-methyl.

In some embodiments, the second herbicide is present in the described compositions at from 0.1 g ae/L to 400 g ae/L, from 0.1 g ae/L to 300 g ae/L, from 0.1 g ae/L to 200 g ae/L, from 0.1 g ae/L to 150 g ae/L, from 0.1 g ae/L to 20 g ae/L, from 0.1 g ae/L to 15 g ae/L, from 0.5 g ae/L to 10 g ae/L, from 1 g ae/L to 10 g ae/L, from 1 g ae/L to 8 g ae/L, from 1 g ae/L to 7 g ae/L, from 1 g ae/L to 6 g ae/L, from 1 g ae/L to 5 g ae/L, from 1 g ae/L to 4 g ae/L, from 1 g ae/L to 3 g ae/L, from 2 g ae/L to 6 g ae/L, from 3 g ae/L to 6 g ae/L or from 4 g ae/L to 6 g ae/L. In some embodiments, the second herbicide is present in the described compositions at from 10 g ae/L to 400 g ae/L, from 10 g ae/L to 350 g ae/L, from 10 g ae/L to 300 g ae/L, from 10 g ae/L to 250 g ae/L, from 10 g ae/L to 200 g ae/L, from 10 g ae/L to 150 g ae/L, from 10 g ae/L to 130 g ae/L, from 10 g ae/L to 110 g ae/L, from 10 g ae/L to 100 g ae/L, from 10 g ae/L to 90 g ae/L, from 10 g ae/L to 80 g ae/L, from 20 g ae/L to 70 g ae/L, from 20 g ae/L to 60 g ae/L, from 20 g ae/L to 50 g ae/L or from 30 g ae/L to 40 g ae/L.

In some embodiments, the described compositions comprise from 0.1 g ae/L to 20 g ae/L, from 0.1 g ae/L to 15 g ae/L, from 0.1 g ae/L to 10 g ae/L, from 0.5 g ae/L to 10 g ae/L, from 1 g ae/L to 10 g ae/L, from 1 g ae/L to 8 g ae/L, from 1 g ae/L to 7 g ae/L, from 1 g ae/L to 5 g ae/L, from 1 g ae/L to 4 g ae/L, from 1 g ae/L to 3 g ae/L, from 2 g ae/L to 6 g ae/L, from 3 g ae/L to 6 g ae/L, or from 4 g ae/L to 6 g ae/L of halauxifen-methyl.

In some embodiments, the described compositions comprise from 20 g ae/L to 150 g ae/L, from 40 g ae/L to 150 g ae/L, from 60 g ae/L to 150 g ae/L, from 80 g ae/L to 150 g ae/L, from 100 g ae/L to 150 g ae/L, from 125 g ae/L to 150 g ae/L, from 40 g ae/L to 130 g ae/L, from 50 g ae/L to 120 g ae/L, from 60 g ae/L to 120 g ae/L, from 70 g ae/L to 120 g ae/L, from 80 g ae/L to 120 g ae/L, from 10 g ae/L to 120 g ae/L, from 10 g ae/L to 100 g ae/L, from 10 g ae/L to 90 g ae/L, from 10 g ae/L to 80 g ae/L, from 10 g ae/L to 70 g ae/L, from 20 g ae/L to 60 g ae/L, from 20 g ae/L to 50 g ae/L, from 30 g ae/L to 40 g ae/L, from 30 g ae/L to 90 g ae/L, from 40 g ae/L to 90 g ae/L, from 50 g ae/L to 90 g ae/L, from 60 g ae/L to 90 g ae/L, or from 70 g ae/L to 85 g ae/L of fluroxypyr-meptyl.

In some embodiments, the described compositions comprise from 20 g ae/L to 400 g ae/L, from 50 g ae/L to 400 g ae/L, from 75 g ae/L to 400 g ae/L, from 100 g ae/L to 400 g ae/L, from 150 g ae/L to 400 g ae/L, from 200 g ae/L to 400 g ae/L, from 250 g ae/L to 400 g ae/L, from 300 g ae/L to 400 g ae/L, or from 325 g ae/L to 375 g ae/L of haloxyfop-methyl and/or haloxyfop-P-methyl.

In some embodiments the weight ratio, on an ae basis, of the water-soluble salt of the synthetic auxin herbicide to the one or more second herbicide in the described compositions may range from 6250:1 to 1:4, from 5500:1 to 1:4, from 4000:1 to 1:4, from 2500:1 to 1:4, from 1500:1 to 1:4, from 500:1 to 1:4, from 400:1 to 1:4, from 300:1 to 1:4, from 200:1 to 1:4, from 150:1 to 1:4, from 125:1 to 1:4, from 100:1 to 1:4, from 75:1 to 1:4, from 50:1 to 1:4, from 25:1 to 1:4, from 15:1 to 1:4, from 10:1 to 1:4, from 8:1 to 1:4, from 7:1 to 1:4, from 6:1 to 1:4, from 5:1 to 1:4, from 4:1 to 1:4, from 3:1 to 1:4, or from 2:1 to 1:4.

In some embodiments the weight ratio, on an ae basis, of a 2,4-D organo ammonium salt to halauxifen-methyl in the described compositions ranges from 6250:1 to 5:1, from 4000:1 to 5:1, from 2500:1 to 5:1, from 1500:1 to 5:1, from 500:1 to 5:1, from 400:1 to 5:1, from 300:1 to 5:1, from 200:1 to 5:1, from 150:1 to 5:1, from 125:1 to 5:1, from 100:1 to 5:1, from 75:1 to 5:1, from 50:1 to 5:1, from 25:1 to 5:1, or from 15:1 to 5:1.

In some embodiments the weight ratio, on an ae basis, of a 2,4-D organo ammonium salt to fluroxypyr-meptyl in the described compositions may range from 30:1 to 2:3, from 25:1 to 2:3, from 20:1 to 2:3, from 15:1 to 2:3, from 10:1 to 2:3, from 8:1 to 2:3, from 7:1 to 2:3, from 6:1 to 2:3, from 5:1 to 2:3, from 4:1 to 2:3, from 3:1 to 2:3, or from 2:1 to 2:3.

In some embodiments the weight ratio, on an ae basis, of a 2,4-D organo ammonium salt to haloxyfop-methyl and/or haloxyfop-P-methyl in the described compositions may range from 30:1 to 1:4, from 25:1 to 1:4, from 20:1 to 1:4, from 15:1 to 1:4, from 10:1 to 1:4, from 8:1 to 1:4, from 7:1 to 1:4, from 6:1 to 1:4, from 5:1 to 1:4, from 4:1 to 1:4, from 3:1 to 1:4, or from 2:1 to 1:4.

Some second herbicide active ingredients described herein do not contain an acid-type functional group and, for these active ingredients, the terms "acid equivalent" and "acid equivalent basis" are not accurate to describe the amount of the second herbicide present. Generally, in such instances, the terms "active ingredient" or "active ingredient basis" can be used to describe the amount of the second herbicide active ingredient present. For example, grams active ingredient per liter (g ai/L) may be used in place of grams acid equivalent per liter (g ae/L), or grams active ingredient per kilogram (g ai/kg) may be used in place of grams acid equivalent per kilogram (g ae/kg) when the active ingredient does not have an acid equivalent.

### C. Surfactants

In some embodiments, the compositions described herein may include one or more surfactants. In some embodiments, the compositions described herein may not include a surfactant. Surfactants useful with the methods and compositions described herein include ionic and/or nonionic surfactants such as, for example, phosphate ester surfactants, polymeric surfactants, or mixtures thereof. Examples of useful polymeric surfactants include AB or ABA block copolymers; block or graft acrylate or methacrylate copolymers; and alkyd polyethylene oxide resins. Useful polymeric surfactants include (1) AB block copolymers that contain EO and PO blocks such as ethylene oxide-propylene oxide (EO-PO) block copolymers and (2) ABA block copolymers having a hydrophilic portion of polyethylene oxide and a hydrophobic portion of poly(12-hydroxystearate). Examples of useful phosphate ester surfactants include acids or salts of mono and dialkyl phosphate esters; acids or salts of ethoxylated mono and dialkyl phosphate esters; acids or salts of mono and dialkyl phosphate esters of ethoxylated tristyrylphenol; acids or salts of mono and dialkyl phosphate esters of ethoxylated phenol and ethoxylated alkylphenols; and mixtures thereof.

In some embodiments the at least one ionic and/or nonionic surfactant is Atlox™ 4912 (Croda; Edison, NJ), and/or Termul™ 2510 (Huntsman International LLC; The Woodlands, TX), and/or Atlox DP 13/6.

In some embodiments, the described compositions comprise, with respect to the total composition, from 0 g/L to 150 g/L, from 0 g/L to 125 g/L, from 0 g/L to 100 g/L, from 0 g/L to 75 g/L, from 0 g/L to 50 g/L, from 0 g/L to 40 g/L, from 0 g/L to 30 g/L, from 0 g/L to 20 g/L, from 0 g/L to 10 g/L, from 0 g/L to 5 g/L, or from 0 g/L to 3 g/L of one or more surfactants. In certain embodiments, the described compositions comprise from 10 g/L to 100 g/L, from 10 g/L to 90 g/L, from 10 g/L to 80 g/L, from 10 g/L to 70 g/L, from 10 g/L to 60 g/L, from 10 g/L to 50 g/L, from 20 g/L to 50 g/L, from 20 g/L to 40 g/L, or from 20 g/L to 30 g/L of one or more surfactants.

### D. Water Immiscible Organic Solvent

A "water immiscible organic solvent" as defined herein means an organic solvent that when mixed with an equivalent volume of water forms two discrete liquid layers. In some embodiments, the described compositions include a water immiscible organic solvent. In some embodiments, the water immiscible organic solvent serves as a carrier for the second herbicide, which may be a solid or a liquid, and provides improved solubility of the second herbicide in the described aqueous herbicidal compositions and improved storage stability for such compositions.

Examples of water immiscible organic solvents that are especially useful with the methods and compositions described herein include those derived from or made from natural, non-petroleum sources such as, for example, plants and animals, and include, vegetable oils, seed oils, animal oils and the like. Such naturally derived oils, and organic solvents derived or made from them, generally have improved safety and environmental profiles when compared to petroleum derived solvents. Especially useful naturally derived, water immiscible, organic solvents include the fatty acid dialkylamides such as, e.g., N,N-dimethylcaprylamide (N,N-dimethyloctanamide), N,N-dimethylcapramide (N,N-dimethyldecanamide), and mixtures thereof, which are available commercially as Agnique® AMD 810 and Agnique® AMD 10, from BASF Corp. (Florham Park, NJ), Genegen® 4166, Genegen® 4231 and Genegen® 4296, from Clariant (Charlotte, NC), Hallcomid M-8-10 and Hallcomid M-10, from Stepan (Northfield, IL), and Armid DM10 and DM810 from AkzoNobel (Chicago, IL). Additional examples of naturally derived organic solvents include the morpholine amides of caprylic / capric fatty acids (C₈/C₁₀) which are commercially available as JEFFSOL® AG-1730 Solvent from Huntsman International LLC (The Woodlands, TX).

In some embodiments, the described compositions include a water immiscible organic solvent selected from, but not limited to, one or more of petroleum fractions or hydrocarbons such as aromatic hydrocarbons, mixed naphthalene and alkyl naphthalene fractions, aromatic solvents, particularly alkyl substituted benzenes such as xylene or propylbenzene fractions, and the like; C₁-C₆ esters of fatty acids derived from vegetable, seed or animal oils such as, methyl caproate, methyl caprylate, methyl caprate, methyl laurate, methyl myristate, methyl palmitate, methyl stearate, methyl oleate, methyl linoleate, methyl linolenate, and the like; ketones such as isophorone and trimethylcyclohexanone (dihydroisophorone); acetate esters such as, methyl, ethyl, propyl, butyl, pentyl, hexyl, or heptyl acetate, and the like; and cyclic alkyl carbonates such as propylene carbonate and butylene carbonate, which are available as the JEFFSOL® alkylene carbonates from Huntsman (The Woodlands, TX), and dibutyl carbonate, also from Huntsman, and mixtures of any of the water immiscible organic solvents described herein.

In some embodiments, the water immiscible organic solvent may comprise, with respect to the total composition, from 0 to 60 percent by weight.

In some embodiments, the compositions described herein comprise from 0 g/L to 500 g/L, from 10 g/L to 500 g/L, from 10 g/L to 450 g/L, from 10 g/L to 400 g/L, from 10 g/L to 350 g/L, from 10 g/L to 300 g/L, from 10 g/L to 250 g/L, from 10 g/L to 200 g/L, from 10 g/L to 150 g/L, from 10 g/L to 100 g/L, from 10 g/L to 80 g/L, from 10 g/L to 70 g/L, from 20 g/L to 70 g/L, from 30 g/L to 60 g/L, from 30 g/L to 50 g/L, or from 35 g/L to 45 g/L of a water immiscible organic solvent.

In some embodiments, the compositions described herein comprise from 0 g/L to 450 g/L, from 0 g/L to 400 g/L, from 0 g/L to 350 g/L, from 0 g/L to 300 g/L, from 0 g/L to 250 g/L, from 0 g/L to 200 g/L, from 0 g/L to 150 g/L, from 0 g/L to 100 g/L, from 0 g/L to 80 g/L, from 0 g/L to 70 g/L, from 0 g/L to 60 g/L, from 0 g/L to 50 g/L, from 0 g/L to 40 g/L, from 0 g/L to 40 g/L, from 0 g/L to 30 g/L, from 0 g/L to 20 g/L, or from 0 g/L to 10 g/L of a water immiscible organic solvent.

In some embodiments, the compositions described herein comprise from 50 g/L to 450 g/L, from 75 g/L to 400 g/L, from 100 g/L to 400 g/L, from 125 g/L to 375 g/L, from 150 g/L to 350 g/L, from 170 g/L to 330 g/L, from 170 g/L to 300 g/L, from 170 g/L to 275 g/L, from 170 g/L to 250 g/L, from 170 g/L to 230 g/L, from 180 g/L to 230 g/L, from 190 g/L to 230 g/L, from 200 g/L to 230 g/L, or from 210 g/L to 230 g/L of a water immiscible organic solvent.

### E. Water

The compositions described herein comprise from 200 g/L to 800 g/L of water. The water serves as both an aqueous solvent and a carrier for the ingredients in the described compositions. In some embodiments, the compositions described herein comprise from 200 g/L to 700 g/L, from 200 g/L to 600 g/L, from 200 g/L to 500 g/L, from 200 g/L to 400 g/L, from 250 g/L to 400 g/L, from 275 g/L to 400 g/L, from 300 g/L to 400 g/L, from 325 g/L to 400 g/L, or from 325 g/L to 375 g/L of water.

### F. Storage Stability

As used herein, "stable" compositions are compositions that are stable physically and/or chemically for defined periods of time to the environments in which they are produced, transported and/or stored. Aspects of stable compositions include, but are not limited to: physical stability at temperatures that range from 0 °C to 54 °C, homogeneity, pourability, liquids that form little or no precipitated solids or exhibit little or no phase separation, compositions that readily dissolve or disperse when poured into a spray tank of water and retain their biological efficacy when applied, for example, by spray application to target pests. In some embodiments, the compositions form stable, homogeneous concentrates that do not exhibit phase separations under the storage conditions. In some embodiments, the described compositions exhibit very little change in viscosity under the storage conditions. In some embodiments, the described compositions exhibit very little chemical decomposition of the active ingredients under the storage conditions.

As used herein, the term "transparent, homogenous herbicidal composition" means compositions that pass light through with clarity. Stated another way, the transparent, homogeneous herbicidal compositions are visually clear to the naked eye.

In some embodiments, the described compositions are stable at temperatures of greater than or equal to 25 °C for a period of at least 2, 4, 6 or 8 weeks. In some embodiments, the described compositions are stable at temperatures of greater than or equal to 40 °C for a period of at least 4, 6 or 8 weeks. In some embodiments, the described compositions are stable at temperatures greater than or equal to 54 °C for a period of at least 2 weeks.

In some embodiments, the compositions do not exhibit or do not significantly exhibit separation or precipitation (or crystallization) of any of the components at low temperatures. In some embodiments, the described compositions remain as homogeneous concentrates for at least 2 weeks at temperatures below 20 °C, below 10 °C, or equal to or less than 5 °C, or equal to or less than 0 °C, or equal to or less than -5 °C, or equal to or less than -10 °C. In certain embodiments, the compositions are stable at these temperatures for at least 2, 4, 6, or 8 weeks.

In some embodiments, the compositions remain as homogeneous concentrates after subjecting them to freeze/thaw (F/T) conditions for at least 2 weeks where the temperature is cycled from -10 °C to 40 °C every 24 hours.

### G. Optional Ingredients

The compositions disclosed herein may optionally contain inert formulation ingredients such as, but not limited to, dispersants, surfactants and wetting agents. These optional inert ingredients may include surfactants conventionally used in the art of formulation that are described, *inter alia*, in "McCutcheon's Detergents and Emulsifiers Annual," MC Publishing Corp., Ridgewood, New Jersey, 1998 and in the "Encyclopedia of Surfactants," Vol. I-III, Chemical Publishing Co., New York, 1980-81. These surface-active agents can be anionic, cationic or nonionic in character and can be employed as emulsifying agents, wetting agents, suspending agents, or for other purposes.

In addition to the specific methods and compositions set forth above, the methods and compositions described herein also may include compositions containing one or more additional compatible ingredients. These additional ingredients may include, for example, one or more pesticides or other ingredients, which may be dissolved or dispersed in the composition and may be selected from acaricides, algicides, antifeedants, avicides, bactericides, bird repellents, chemosterilants, defoliants, desiccants, disinfectants, fungicides, herbicide safeners, herbicides, insect attractants, insecticides, insect repellents, mammal repellents, mating disrupters, molluscicides, nematicides, plant activators, plant growth regulators, rodenticides, semiochemicals, synergists, and virucides. Also, any other additional ingredients providing functional utility such as, for example, antifoam agents, antimicrobial agents, buffers, corrosion inhibitors, dispersing agents, dyes, fragrants, freezing point depressants, neutralizing agents, odorants, penetration aids, sequestering agents, spray drift control agents, spreading agents, stabilizers, sticking agents, viscosity-modifying additives, water soluble solvents and the like, may be included in these compositions.

When the described compositions are used in combination with the additional active ingredients such as, for example, herbicide active ingredients, the compositions described herein can be formulated with the other active ingredient or active ingredients as premix concentrates, tank-mixed in water with the other active ingredient or active ingredients for spray application or applied sequentially with the other active ingredient or active ingredients in separate spray applications.

### H. Methods of Preparation and Use

In some embodiments, the compositions described herein are prepared by the steps of:
(1) preparing a solution of the one or more second herbicide in the organic solvent and, optionally, including a surfactant;
(2) adding the solution prepared in step (1) to a concentrated solution of a water-soluble salt of a synthetic auxin herbicide in water with good mixing to form a clear solution; and
(3) optionally, adding any additional compatible active or inert ingredients.

In some embodiments, the compositions described herein are prepared by the steps of:
(1) providing a second herbicide that is a liquid and, optionally, mixing it with the organic solvent and, optionally, including a surfactant;
(2) adding the composition prepared in step (1) to a concentrated solution of a water-soluble salt of a synthetic auxin herbicide in water with good mixing to form a clear solution; and
(3) optionally, adding any additional compatible active or inert ingredients.

Exemplary water compatible ingredients that may be added to the described compositions include, but are not limited to, water soluble or water insoluble dispersing surfactants, water insoluble active ingredients and optionally, other inert ingredients such as pH buffers, wetting agents, antifreeze agents, antifoam agents, biocides, etc.

The aqueous herbicidal compositions described herein may optionally be diluted in an aqueous spray mixture for agricultural application such as for weed control in crop fields or in turf. Such compositions are typically diluted with an inert carrier, such as water, before application. The diluted compositions, which are usually applied, for example, to weeds, the locus of weeds or the locus of where weeds may eventually emerge, in some embodiments contain 0.0001 to 5 weight percent of the active ingredient or from 0.001 to 0.1 weight percent of the active ingredient. The present compositions can be applied, for example, to weeds or their locus by the use of conventional ground or aerial sprayers, by addition to irrigation water and by other conventional means known to those skilled in the art.

The compositions and methods described herein may be used in controlling undesirable vegetation in crops possessing single, multiple or stacked genomic traits conferring tolerance to one or more herbicide chemistries and/or inhibitors with single or multiple modes of action.

### I. Examples

The following Examples are presented to illustrate various aspects of the compositions described herein and should not be construed as limitations to the claims.

### Example 1: 2,4-D choline salt aqueous concentrate

A 2,4-D choline salt aqueous concentrate solution was prepared by reacting 2,4-D acid technical with an equimolar amount of choline hydroxide in water at ambient temperature. Additional water was then added, if needed, to reach a target 2,4-D acid equivalent (ae) concentration of 45.7 wt%.

### Example 2: 2,4-D dimethylammnonium (2,4-D DMA) salt aqueous concentrate

A 2,4-D DMA salt aqueous concentrate solution was prepared by reacting 2,4-D acid technical with an equimolar amount of dimethylamine (40 wt%) aqueous solution in water at ambient temperature. Additional water was then added, if needed, to reach a target 2,4-D acid equivalent (ae) concentration of 55.3 wt%.

### Examples 3 to 6: Herbicidal aqueous compositions of 2,4-D DMA and a liquid second herbicide, haloxyfop-P-methyl ester

Examples 3 to 6 were prepared by adding haloxyfop-P-methyl ester, optionally dissolved in Genagen 4166, to a 2,4-D DMA aqueous concentrate to provide the compositions described in Table 1 below. Transparent and homogenous aqueous compositions were formed by mixing the samples by hand shaking. No crystal formation/growth or phase separation was observed with any of the samples after: (1) 2 weeks of storage at freeze-thaw (F/T) conditions (-10 °C/40 °C cycle every 24 hours), and (2) 2 weeks of storage at 0 °C. The melting point of each sample was less than -15 °C according to differential scanning calorimetry (DSC) measurement. Diluting a 1% sample of each sample in tap water resulted in an opaque, oil-in-water emulsion.

**Table 1. Concentrate Compositions Containing 2,4-D DMA and Haloxyfop-P-methyl¹**

| **Sample ID** | **2,4-D DMA Concentrate² (wt, g)** | **Haloxyfop-P-methyl (wt, g)** | **Genagen 4166 (wt,g)** | **2,4-D Content in ae (wt%)** | **Haloxyfop-P-methyl (wt%)** |
|---|---|---|---|---|---|
| Example 3 | 20.0 | 0.5 | 0 | 54.0% | 2.4% |
| Example 4 | 19.0 | 1.0 | 0 | 52.5% | 5.0% |
| Example 5 | 14.0 | 5.0 | 6.0 | 31.0% | 20.0% |
| Example 6 | 10.0 | 10.0 | 10.0 | 18.4% | 33.3% |

| | | | | | |
|---|---|---|---|---|---|
| ¹The four concentrate compositions were stable after storage for an extended period of time at room temperature. ²The sample prepared in Example 2 was used as the 2,4-DMA concentrate for preparing the samples described in Examples 3 to 6. | | | | | |

### Example 7: Halauxifen-methyl concentrate in Genagen 4166 solvent

A halauxifen-methyl concentrate solution in Genagen 4166 solvent was prepared by dissolving halauxifen-methyl (10.42 active ingredient (ai) wt%) in Genagen 4166 solvent (89.58 wt%) with mixing until a clear solution was obtained at ambient temperature.

### Example 8: Herbicidal aqueous composition of 2,4-D DMA and halauxifen-methyl

The halauxifen-methyl concentrate solution (Example 7, 4.5 g), Dowanol DPM (5.75 g), Atlox 4912 (0.25 g), and Atlox DP 13/6 (2.0 g) were mixed together to provide a homogeneous organic phase, to which the 2,4-D DMA aqueous concentrate (Example 2, 78.0 g) and additional water (9.5 g) were added. Upon mild hand mixing, a transparent and homogenous, aqueous solution was formed that remained as a transparent and homogenous solution without any crystal formation/growth or phase separation after: (1) 2 weeks of storage at freeze-thaw (F/T) conditions (-10 °C/40 °C cycle every 24 hours), and (2) 2 weeks of storage at 0 °C. The melting point of the sample was less than -10 °C according to differential scanning calorimetry (DSC) measurement. The active ingredients, halauxifen-methyl and 2,4-D, in the composition were found to be chemically stable, according to the FAO (Food and Agriculture Organization of the United Nations) guidelines on active ingredient retention, after 2 weeks of storage at 54 °C.

### Example 9: Herbicidal aqueous composition of 2,4-D choline and halauxifen-methyl

The halauxifen-methyl concentrate solution (Example 7, 4.5 g), Atlox 4912 (0.25 g), and Atlox DP 13/6 (2.0 g) were mixed well together to provide a homogeneous organic phase, to which the 2,4-D choline aqueous concentrate (Example 1, 87.5 g) and additional water (5.75 g) was added. Upon mild hand mixing, a transparent and homogenous, aqueous solution was formed that remained as a transparent and homogenous solution without any crystal formation/growth or phase separation after: (1) 2 weeks of storage at freeze-thaw (F/T) conditions (-10 °C/40 °C cycle every 24 hours), and (2) 2 weeks of storage at 0 °C. The melting point of the sample was less than -10 °C according to differential scanning calorimetry (DSC) measurement. The active ingredients, halauxifen-methyl and 2,4-D, in the composition were found to be chemically stable, according to the FAO guidelines on active ingredient retention, after 2 weeks of storage at 54 °C. Diluting a 1% sample of this solution in 342 ppm hardness water resulted in the formation of a transparent solution to the naked eye.

### Example 10: Halauxifen-methyl and fluroxypyr-MHE concentrate in Genagen 4166 solvent

An halauxifen-methyl/fluroxypyr-meptyl concentrate solution in Genagen 4166 solvent was prepared by dissolving halauxifen-methyl (2.25 active ingredient (ai) wt%) and fluroxypyr-meptyl (48.36 ai wt%) in Genagen 4166 solvent (49.39 wt%) with mixing until a clear solution was obtained at ambient temperature.

### Example 11: Herbicidal aqueous composition of 2,4-D choline, halauxifen-methyl and fluroxypyr-meptyl

The halauxifen-methyl/fluroxypyr-meptyl concentrate solution (Example 10, 13.33 g), additional Genagen 4166 solvent (12.42 g), Atlox 4912 (0.25 g), and Atlox DP 13/6 (2.0 g) were mixed together to provide a homogeneous organic phase, to which the 2,4-D choline aqueous concentrate (Example 1, 72.0 g) was added. Upon mild hand mixing, a transparent and homogenous, aqueous solution was formed with a pH of 7.05 that remained as a transparent and homogenous solution without any crystal formation/growth or phase separation after: (1) 2 weeks of storage at freeze-thaw (F/T) conditions (-10 °C/40 °C cycle every 24 hours), and (2) 2 weeks of storage at 54 °C. The active ingredients in the composition were found to be chemically stable as evidenced by >95% retention of the halauxifen-methyl, fluroxypyr-meptyl and 2,4-D after 2 weeks of storage at 54 °C. The melting point of the sample was less than -20 °C according to differential scanning calorimetry (DSC) measurement. Diluting a 1% sample of this solution in 342 ppm hardness water resulted in the formation of an opaque, oil-in-water emulsion.

### Example 12: Herbicidal aqueous composition of 2,4-D choline, halauxifen-methyl and fluroxypyr-meptyl

The halauxifen-methyl/fluroxypyr-meptyl concentrate solution (Example 10, 13.33 g) and additional Genagen 4166 solvent (14.67 g) were mixed well together to provide a homogeneous organic phase, to which the 2,4-D choline aqueous concentrate (Example 1, 72.0 g) was added. Upon mild hand mixing, a transparent and homogenous aqueous solution was formed with a pH of 7.3 that remained as a transparent and homogenous solution without any crystal formation/growth or phase separation after: (1) 2 weeks storage at freeze-thaw (F/T) conditions (-10 °C/40 °C cycle every 24 hours), and (2) storage at 54 °C for 2 weeks. Diluting a 5% sample of this solution in 342 ppm hardness water resulted in the formation of an opaque, oil-in-water emulsion. The droplet size of the emulsion was analyzed using a Mastersizer 2000 (Malvern Instruments, UK) and found to be 3.0 microns (D₅₀). The emulsion was free of cream or oil formation after 24 hours at ambient temperature.

### Example 13: Herbicidal aqueous composition of 2,4-D DMA, halauxifen-methyl and fluroxypyr-meptyl

The halauxifen-methyl/fluroxypyr-meptyl concentrate solution (Example 10, 17.5 g), Dowanol DPM (4.25 g), Atlox 4912 (0.25 g), and Atlox DP 13/6 (2.0 g) were mixed well together to provide a homogeneous organic phase, to which the 2,4-D DMA aqueous concentrate (Example 2, 76.0 g) was added. Upon mild hand mixing, a transparent and homogenous aqueous solution was formed that remained as a transparent and homogenous solution without any crystal formation/growth or phase separation after: (1) 2 weeks of storage at freeze-thaw (F/T) conditions (-10 °C/40 °C cycle every 24 hours), and (2) 2 weeks of storage at 54 °C. The melting point of the sample was less than -15 °C according to differential scanning calorimetry (DSC) measurement. Diluting a 1% sample of this solution in 342 ppm hardness water resulted in the formation of an opaque, oil-in-water emulsion.

### Example 14: Herbicidal aqueous composition of 2,4-D DMA, halauxifen-methyl and fluroxypyr-meptyl

The halauxifen-methyl/fluroxypyr-meptyl concentrate solution (Example 10, 13.33 g) and additional Genagen 4166 solvent (6.5 g) were mixed well together to provide a homogeneous organic phase, to which the 2,4-D DMA aqueous concentrate (Example 2, 76.0 g) was added. Upon mild hand mixing, a transparent and homogenous aqueous solution was formed that remained as a transparent and homogenous solution without any crystal formation/growth or phase separation after: (1) 2 weeks storage at freeze-thaw (F/T) conditions (-10 °C/40 °C cycle every 24 hours), and (2) storage at 54 °C for 2 weeks. Diluting a 5% sample of this solution in 342 ppm hardness water resulted in the formation of an opaque, oil-in-water emulsion. The emulsion was free of cream or oil formation after 24 hours at ambient temperature.

### Example 15: Halauxifen-methyl concentrate in solvent of Genagen 4166 and Agnique ME 1218

A halauxifen-methyl concentrate solution in a mixed solvent of Genagen 4166 and Agnique ME 1218 was prepared by dissolving halauxifen-methyl (5.00 active ingredient (ai) wt%) in a mixture of Genagen 4166 (47.50 wt%) and Agnique ME 1218 (47.50 wt%) until a transparent, homogeneous solution was obtained at ambient temperature.

### Example 16: Halauxifen-methyl concentrate in solvent of Genagen 4166 and Aromatic A-200

A halauxifen-methyl concentrate solution in a mixed solvent of Genagen 4166 and Aromatic A-200 was prepared by dissolving halauxifen-methyl (5.00 active ingredient (ai) wt%) in a mixed solvent of Genagen 4166 (47.50 wt%) and Aromatic A-200 (47.50 wt%) until a transparent, homogeneous solution was obtained at ambient temperature.

### Example 17: Halauxifen-methyl concentrate in solvent of Genagen 4166

A halauxifen-methyl concentrate solution in Genagen 4166 solvent was prepared by dissolving halauxifen-methyl (5.00 active ingredient (ai) wt%) in Genagen 4166 (95.00 wt%) until a transparent, homogeneous solution was obtained at ambient temperature.

### Examples 18-22: Herbicidal aqueous compositions of 2,4-D DMA and halauxifen-methyl

Samples of 2.0 g, 4.0 g, 8.0 g, 12.0 g, and 16.0 g of the concentrate prepared in Example 15 were used as the homogeneous organic phase to which 18.0 g, 16.0 g, 12.0 g, 8.0 g, and 4.0 g, respectively, of the 2,4-D DMA aqueous concentrate from Example 2 were added. Upon mild hand mixing of each sample, transparent and homogenous, aqueous solutions were formed that remained as transparent and homogenous solutions without any crystal formation/growth or phase separation after at least 1 week of storage at ambient temperature. The aqueous solutions were then diluted in tap water in a ratio of 1:100 (w/w) at ambient temperature. After hand mixing the diluted samples, opaque oil-in-water emulsions were formed with no oil-water separation observed after being allowed to sit for 2 hours.

### Examples 23-27: Herbicidal aqueous compositions of 2,4-D DMA and halauxifen-methyl

Samples of 2.0 g, 4.0 g, 8.0 g, 12.0 g, and 16.0 g of the concentrate prepared in Example 16 were used as the homogeneous organic phase to which 18.0 g, 16.0 g, 12.0 g, 8.0 g, and 4.0 g, respectively, of the 2,4-D DMA aqueous concentrate from Example 2 were added. Upon mild hand mixing of each sample, transparent and homogenous, aqueous solutions were formed that remained as transparent and homogenous solutions without any crystal formation/growth or phase separation after at least 1 week of storage at ambient temperature. The aqueous solutions were then diluted in tap water in a ratio of 1:100 (w/w) at ambient temperature. After hand mixing the diluted samples, opaque oil-in-water emulsions were formed with no oil-water separation observed after being allowed to sit for 2 hours.

### Example 28: 2-methyl-4-chlorophenoxyacetic acid (MCPA) dimethylammnonium (DMA) salt aqueous concentrate

An MCPA DMA salt aqueous concentrate solution was prepared by reacting MCPA technical with an equimolar amount of dimethylamine (40 wt%) solution in water at ambient temperature. Additional water was then added, if needed, to reach a target MCPA acid equivalent (ae) concentration of 52.00 wt%.

### Examples 29-33: Herbicidal aqueous compositions ofMCPA DMA and halauxifen-methyl

Samples of 2.0 g, 4.0 g, 8.0 g, 12.0 g, and 16.0 g of the concentrate prepared in Example 15 were used as the homogeneous organic phase to which 18.0 g, 16.0 g, 12.0 g, 8.0 g, and 4.0 g, respectively, of the MCPA DMA aqueous concentrate from Example 28 were added. Upon mild hand mixing of each sample, transparent and homogenous, aqueous solutions were formed that remained as transparent and homogenous solutions without any crystal formation/growth or phase separation after at least 1 week of storage at ambient temperature. The aqueous solutions were then diluted in tap water in a ratio of 1:100 (w/w) at ambient temperature. After hand mixing the diluted samples, opaque oil-in-water emulsions were formed with no oil-water separation observed after being allowed to sit for 2 hours.

### Examples 34-38: Herbicidal aqueous compositions ofMCPA DMA and halauxifen-methyl

Samples of 2.0 g, 4.0 g, 8.0 g, 12.0 g, and 16.0 g of the concentrate prepared in Example 16 were used as the homogeneous organic phase to which 18.0 g, 16.0 g, 12.0 g, 8.0 g, and 4.0 g, respectively, of the MCPA DMA aqueous concentrate from Example 28 were added. Upon mild hand mixing of each sample, transparent and homogenous, aqueous solutions were formed that remained as transparent and homogenous solutions without any crystal formation/growth or phase separation after at least 1 week of storage at ambient temperature. The aqueous solutions were then diluted in tap water in a ratio of 1:100 (w/w) at ambient temperature. After hand mixing the diluted samples, opaque oil-in-water emulsions were formed with no oil-water separation observed after being allowed to sit for 2 hours.

### Example 39: 3,6-dichloro-2-pyridinecarboxylic acid monoethanol amine (clopyralid olamine) salt aqueous concentrate

A clopyralid olamine salt aqueous concentrate solution was prepared by dissolving solid clopyralid olamine in water at ambient temperature to form a clear solution with a clopyralid acid equivalent (ae) concentration of 53.12 wt%.

### Example 40: Clopyralid Olamine and 2,4-D DMA aqueous concentrate

A clopyralid olamine salt and 2,4-D DMA salt aqueous concentrate solution was prepared by mixing the 2,4-D DMA salt aqueous concentrate prepared in Example 2 with the clopyralid olamine salt aqueous concentrate prepared in Example 39 at ambient temperature. A clear solution was formed with a 2,4-D acid equivalent (ae) concentration of 47.14 wt%, and a clopyralid acid equivalent (ae) concentration of 7.86 wt%.

### Example 41-42: Herbicidal aqueous composition of clopyralid olamine and 2,4-D DMA and halauxifen-methyl

Samples of 2.0 g and 4.0 g of the concentrate prepared in Example 17 were used as the homogeneous organic phase to which 18.0 g and 16.0g, respectively, of the clopyralid olamine and 2,4-D DMA aqueous concentrate prepared in Example 40 were added. Upon mild hand mixing, transparent and homogenous, aqueous solutions were formed that remained as transparent and homogenous solutions without any crystal formation/growth or phase separation after at least 1 week of storage at ambient temperature. The aqueous solutions were then diluted in tap water in a ratio of 1:100 (w/w) at ambient temperature. After hand mixing the diluted samples, opaque oil-in-water emulsions were formed with no oil-water separation observed after being allowed to sit for 2 hours.

### Example 43: Cloquintocet acid dimethylammonium (CQC DMA) salt aqueous concentrate

A CQC DMA salt aqueous concentrate solution was prepared by reacting CQC technical with an equimolar amount of dimethylamine (40 wt%) solution in water at ambient temperature. Additional water was then added, if needed, to reach a target CQC in acid equivalent (ae) concentration of 37.80 wt%.

### Example 44: Herbicidal aqueous composition of clopyralid olamine, 2,4-D DMA, halauxifen-methyl, and CQC DMA

A 2.10 g sample of the concentrate prepared in Example 17 was used as the homogeneous organic phase to which 15.18 g of the 2,4-D DMA aqueous concentrate prepared in Example 2, 2.63 g of the clopyralid olamine concentrate prepared in Example 39, and 0.20 g of the CQC DMA concentrate prepared in Example 43 were added. Upon mild hand mixing, a transparent and homogenous, aqueous solution was formed that remained as a transparent and homogenous solution without any crystal formation/growth or phase separation after at least 1 week of storage at ambient temperature. The aqueous solution was then diluted in tap water in a ratio of 1:100 (w/w) at ambient temperature and after hand mixing, an opaque oil-in-water emulsion was formed with no oil-water separation observed after being allowed to sit for 2 hours.

### Example 45: 3,5,6-trichloro-2-pyridinyloxyacetic acid 2-hydroxy-N,N,N-trimethylethanolammonium (triclopyr choline) salt aqueous concentrate

A triclopyr choline salt aqueous concentrate solution was prepared by reacting triclopyr technical with an equimolar amount of choline hydroxide aqueous solution in water at ambient temperature. Additional water was then added, if needed, to reach a target triclopyr acid equivalent (ae) concentration of 480 g/L.

### Example 46-47: Herbicidal aqueous composition of triclopyr choline and halauxifen-methyl

Samples of 2.0 g and 4.0 g of the concentrate prepared in Example 17 were used as the homogeneous organic phase to which 18.0 g and 12.0 g samples, respectively, of the triclopyr choline aqueous concentrate prepared in Example 45, were added. Upon mild hand mixing, transparent and homogenous, aqueous solutions were formed that remained as transparent and homogenous solutions without any crystal formation/growth or phase separation after at least 1 week of storage at ambient temperature. The aqueous solutions were then diluted in tap water in a ratio of 1:100 (w/w) at ambient temperature and after hand mixing, opaque oil-in-water emulsions were formed with no oil-water separation observed after being allowed to sit for 2 hours.

### Example 48: 3,6-dichloro-2-methoxybenzoic acid dimethylammonium (dicamba DMA) salt aqueous concentrate

A dicamba DMA salt aqueous concentrate solution was prepared by reacting dicamba technical with an equimolar amount of DMA solution (40 wt%) in water at ambient temperature. The final dicamba acid equivalent (ae) concentration was 65.8 wt%.

### Example 49: Herbicidal aqueous composition of dicamba DMA and halauxifen-methyl

A 2.0 g sample of the concentrate prepared in Example 17 was used as the homogeneous organic phase, to which 17.6 g of the dicamba DMA aqueous concentrate prepared in Example 48 and 0.4 g of Atlox DM 13/6 were added. Upon mild hand mixing, a transparent and homogenous, aqueous solution was formed that remained as a transparent and homogenous solution without any crystal formation/growth or phase separation after at least 1 week of storage at ambient temperature. The aqueous solution was then diluted in tap water in a ratio of 1:100 (w/w) at ambient temperature and after hand mixing, an opaque oil-in-water emulsion was formed with no oil-water separation observed after being allowed to sit for 2 hours.

## Claims

1. A stable aqueous herbicidal composition comprising:
a) a water soluble salt of a synthetic auxin herbicide comprising, with respect to the total composition, from 100 grams acid equivalent per liter (g ae/L) to 625 g ae/L;
b) a second herbicide comprising, with respect to the total composition, from 0.1 gram g ae/L to 400 g ae/L of a water insoluble herbicide;
c) from 0 g/L to 150 g/L, with respect to the total composition, of at least one of an ionic and a non-ionic surfactant;
d) from 0 g/L to 500 g/L, with respect to the total composition, of a water immiscible organic solvent; and
e) from 200 g/L to 800 g/L, with respect to the total composition, of water;
wherein the second herbicide includes a haloxyfop ester, a compound of the Formula 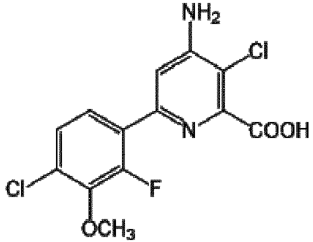 or a C₁-C₆ alkyl ester or salt thereof; or a compound having the following Formula 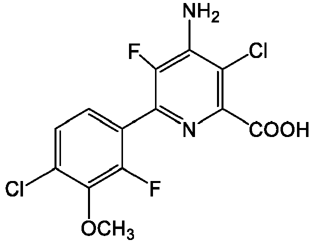 or a C₁-C₁₂ alkyl or C₇-C₁₂ arylalkyl ester or salt thereof; and
wherein the composition forms a stable, transparent, and homogenous herbicidal composition.

2. The stable aqueous herbicidal composition of Claim 1, wherein the synthetic auxin herbicide is 2,4-D, 2,4-DB, aminocyclopyrachlor, aminopyralid, clopyralid, dicamba, MCPA, MCPB, picloram, triclopyr, or mixtures thereof.

3. The stable aqueous herbicidal composition of any of Claims 1-2, wherein the synthetic auxin herbicide comprises one or more organo ammonium cations, preferably wherein the organo ammonium cations have from 1 to 12 carbon atoms and more preferably are isopropyl ammonium, diglycol ammonium, dimethyl ammonium, diethyl ammonium, triethyl ammonium, dimethylethanol ammonium, diethanol ammonium, triethanol ammonium, triisopropanol ammonium, tetramethyl ammonium, choline, N,N-bis-(3-aminopropyl)methyl ammonium, or mixtures thereof and even more perferably are dimethyl ammonium, choline, diglycol ammonium, or N,N-bis-(3-aminopropyl)methyl ammonium.

4. The stable aqueous herbicidal composition of any of Claims 1-3, wherein the second herbicide is halauxifen-methyl, a haloxyfop-P ester, haloxyfop-P-methyl, a compound having the following Formula 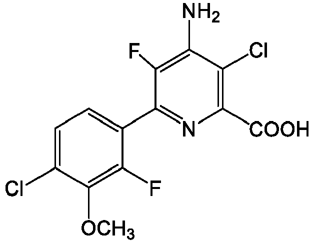 or a C₁-C₁₂ alkyl or C₇-C₁₂ arylalkyl ester or salt thereof, or mixtures thereof.

5. The herbicidal composition of any of Claims 1-4, wherein the second herbicide is a mixture of halauxifen-methyl and haloxyfop-P-methyl, a mixture of halauxifen-methyl and isoxaben or a combination of halauxifen-methyl and fluroxypyr-meptyl.

6. A method of controlling undesirable vegetation comprising contacting the vegetation or an area adjacent thereto to prevent the emergence of growth of vegetation a herbicidally effective amount of a herbicidal composition comprising:
a. a water soluble salt of synthetic auxin herbicide comprising, with respect to the total composition, from 100 g ae/L to 625 g ae/L;
b. a second herbicide comprising, with respect to the total composition, from 0.1 g ae/L to 400 g ae/L;
c. from 0 g/L to 150 g/L, with respect to the total composition, of at least one of an ionic and/or a non-ionic surfactant;
d. from 0 g/L to 500 g/L of a water immiscible organic solvent; and
e. from 200 g/L to 800 g/L, with respect to the total composition, of water;
wherein the second herbicide includes a haloxyfop ester, a compound of the Formula 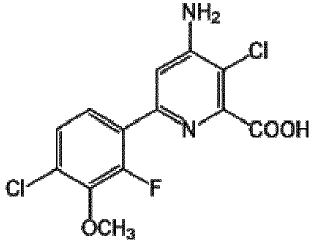 or a C₁-C₆ alkyl ester or salt thereof; or a compound having the following Formula 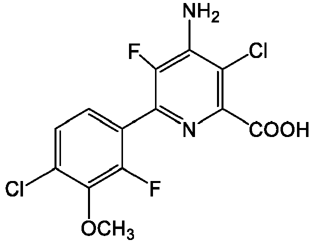 or a C₁-C₁₂ alkyl or C₇-C₁₂ arylalkyl ester or salt thereof; and
wherein the composition forms a stable, transparent, and homogenous herbicidal composition.

7. The stable aqueous herbicidal composition of any of claims 1-5 or the method of Claim 6, wherein the herbicidal composition shows no visible phase separation after storage at 54 °C for 2 weeks.

8. The stable aqueous herbicidal composition of any of claims 1-5 or the method of any of Claims 6-7, wherein the herbicidal composition shows no visible crystal formation after storage at -10/40 °C freeze/thaw cycling conditions every 24 hours for 2 weeks.

9. The method of any of Claims 6-8, wherein the water soluble salt of the synthetic auxin herbicide comprises one or more organo ammonium cations, preferably wherein the organo ammonium cations have from 1 to 12 carbon atoms and more preferably are isopropyl ammonium, diglycol ammonium, dimethyl ammonium, diethyl ammonium, triethyl ammonium, monoethanol ammonium, dimethylethanol ammonium, diethanol ammonium, triethanol ammonium, triisopropanol ammonium, tetramethyl ammonium, tetraethylammonium, choline, N,N-bis-(3-aminopropyl)methyl ammonium, or mixtures thereof and even more preferably are dimethyl ammonium, choline, diglycol ammonium, or N,N-bis-(3-aminopropyl)methyl ammonium.

10. The stable aqueous herbicidal composition of any of claims 1-5 or the method of any of Claims 6-9, wherein the weight ratio on an ae basis of the synthetic auxin herbicide to the one or more second herbicide is from 6250:1 to 1:4.

11. The method of any of Claims 6-10, wherein the synthetic auxin herbicide is a 2,4-D organo ammonium salt and the second herbicide is haloxyfop-P-methyl and the weight ratio on an ae basis of the 2,4-D organo ammonium salt to haloxyfop-P-methyl is from 30:1 to 1:4.

12. The method of any of Claims 6-11, wherein the second herbicide is a mixture of halauxifen-methyl and fluroxypyr-meptyl, a mixture of halauxifen-methyl and haloxyfop-P-methyl or a mixture of halauxifen-methyl and isoxaben.

13. The stable aqueous herbicidal composition of any of claims 1-5 or the method of any of Claims 6-12, further comprising an agriculturally acceptable adjuvant or carrier and/or a herbicide safener.

14. The method of any of Claims 6-13, wherein the undesirable vegetation is controlled in a herbicide tolerant crop, wherein the herbicide tolerant crop preferably possesses single, multiple or stacked traits conferring tolerance to one or more herbicide chemistries and/or inhibitors with single or multiple modes of action.

15. The method of Claim 14, wherein the undesirable vegetation comprises a herbicide resistant or tolerant weed.

## Patentansprüche

1. Eine stabile wässrige herbizide Zusammensetzung umfassend:
a) ein wasserlösliches Salz eines synthetischen Auxinherbizids umfassend, bezogen auf die Gesamtzusammensetzung, von 100 Gramm Säureäquivalent pro Liter (g ae/l) bis 625 g ae/l;
b) ein zweites Herbizid umfassend, bezogen auf die Gesamtzusammensetzung, von 0,1 g ae/l bis 400 g ae/l eines wasserunlöslichen Herbizids;
c) von 0 g/l bis 150 g/l, bezogen auf die Gesamtzusammensetzung, mindestens eines von einem ionischen und einem nichtionischen oberflächenaktiven Mittel;
d) von 0 g/l bis 500 g/l, bezogen auf die Gesamtzusammensetzung, eines mit Wasser nicht mischbaren organischen Lösungsmittels; und
e) von 200 g/l bis 800 g/l, bezogen auf die Gesamtzusammensetzung, an Wasser;
wobei das zweite Herbizid einen Haloxyfopester, eine Verbindung der Formel 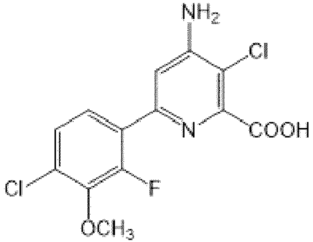 oder einen C₁-C₆-Alkylester oder ein Salz davon; oder eine Verbindung mit der folgenden Formel 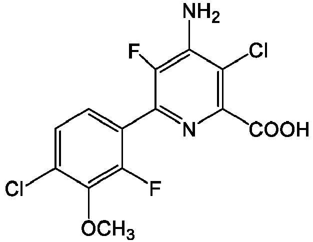 oder einen C₁-C₁₂-Alkyl- oder C₇-C₁₂-Arylalkylester oder ein Salz davon enthält; und
wobei die Zusammensetzung eine stabile transparente und homogene herbizide Zusammensetzung bildet.

2. Die stabile wässrige herbizide Zusammensetzung gemäß Anspruch 1, wobei das synthetische Auxinherbizid 2,4-D, 2,4-DB, Aminocyclopyrachlor, Aminopyralid, Clopyralid, Dicamba, MCPA, MCPB, Picloram, Triclopyr oder Mischungen davon darstellt.

3. Die stabile wässrige herbizide Zusammensetzung gemäß irgendeinem der Ansprüche 1 bis 2, wobei das synthetische Auxinherbizid ein oder mehrere Organoammoniumkationen umfasst, wobei die Organoammoniumkationen vorzugsweise von 1 bis 12 Kohlenstoffatome aufweisen und bevorzugter Isopropylammonium, Diglykolammonium, Dimethylammonium, Diethylammonium, Triethylammonium, Dimethylethanolammonium, Diethanolammonium, Triethanolammonium, Triisopropanolammonium, Tetramethylammonium, Cholin, N,N-Bis-(3-aminopropyl)methylammonium oder Mischungen davon darstellen und noch bevorzugter Dimethylammonium, Cholin, Diglykolammonium oder N,N-Bis-(3-aminopropyl)methylammonium darstellen.

4. Die stabile wässrige herbizide Zusammensetzung gemäß irgendeinem der Ansprüche 1 bis 3, wobei das zweite Herbizid Halauxifen-Methyl, ein Haloxyfop-P-Ester, Haloxyfop-P-Methyl, eine Verbindung mit der folgenden Formel 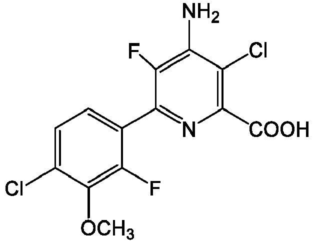 oder einen C₁-C₁₂-Alkyl- oder C₇-C₁₂-Arylalkylester oder ein Salz davon oder Mischungen davon darstellt.

5. Die herbizide Zusammensetzung gemäß irgendeinem der Ansprüche 1 bis 4, wobei das zweite Herbizid eine Mischung von Halauxifen-Methyl und Haloxyfop-P-Methyl, eine Mischung von Halauxifen-Methyl und Isoxaben oder eine Kombination von Halauxifen-Methyl und Fluroxypyr-Meptyl darstellt.

6. Ein Verfahren zur Bekämpfung unerwünschter Vegetation umfassend das In-Kontakt-Bringen der Vegetation oder einer daran angrenzenden Fläche, um das Auftreten oder Wachstum von Vegetation zu verhindern, mit einer herbizid wirksamen Menge einer herbiziden Zusammensetzung umfassend:
a. ein wasserlösliches Salz eines synthetischen Auxinherbizids umfassend, bezogen auf die Gesamtzusammensetzung, von 100 g ae/l bis 625 g ae/l;
b. ein zweites Herbizid umfassend, bezogen auf die Gesamtzusammensetzung, von 0,1 g ae/l bis 400 g ae/l;
c. von 0 g/l bis 150 g/l, bezogen auf die Gesamtzusammensetzung, mindestens eines von einem ionischen und/oder einem nichtionischen oberflächenaktiven Mittel;
d. von 0 g/l bis 500 g/l eines nicht mit Wasser mischbaren organischen Lösungsmittels; und
e. von 200 g/l bis 800 g/l bezogen auf die Gesamtzusammensetzung, an Wasser;
wobei das zweite Herbizid einen Haloxyfopester, eine Verbindung der Formel 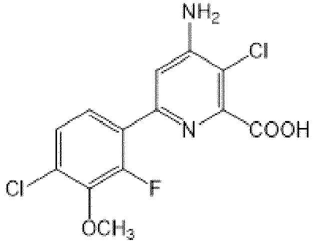 oder einen C₁-C₆-Alkylester oder ein Salz davon; oder eine Verbindung mit der folgenden Formel 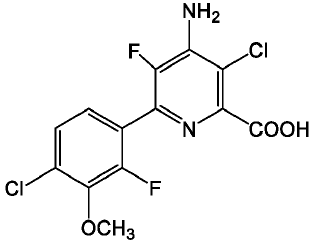 oder einen C₁-C₁₂-Alkyl- oder C₇-C₁₂-Arylalkylester oder ein Salz davon enthält; und
wobei die Zusammensetzung eine stabile, transparente und homogene herbizide Zusammensetzung bildet.

7. Die stabile wässrige herbizide Zusammensetzung gemäß irgendeinem der Ansprüche 1 bis 5 oder das Verfahren gemäß Anspruch 6, wobei die herbizide Zusammensetzung keine sichtbare Phasentrennung nach Lagerung bei 54 °C für 2 Wochen zeigt.

8. Die stabile wässrige herbizide Zusammensetzung gemäß irgendeinem der Ansprüche 1 bis 5 oder des Verfahrens gemäß irgendeinem der Ansprüche 6 bis 7, wobei die herbizide Zusammensetzung keine sichtbare Kristallbildung nach Lagerung bei -10/40 °C Frost-/Auftauwechselbedingungen alle 24 Stunden für 2 Wochen zeigt.

9. Das Verfahren gemäß irgendeinem der Ansprüche 6 bis 8, wobei das wasserlösliche Salz des synthetischen Auxin-Herbizids ein oder mehrere Organoammoniumkationen umfasst, wobei die Organoammoniumkationen vorzugsweise von 1 bis 12 Kohlenstoffatome aufweisen und bevorzugter Isopropylammonium, Diglykolammonium, Dimethylammonium, Diethylammonium, Triethylammonium, Monoethanolammonium, Dimethylethanolammonium, Diethanolammonium, Triethanolammonium, Triisopropanolammonium, Tetramethylammonium, Tetraethylammonium, Cholin, N,N-Bis-(3-aminopropyl)methylammonium oder Mischungen davon darstellen und noch bevorzugter Dimethylammonium, Cholin, Diglykolammonium oder N,N-Bis-(3-aminopropyl)methylammonium darstellen.

10. Die stabile wässrige herbizide Zusammensetzung gemäß irgendeinem der Ansprüche 1 bis 5 oder das Verfahren gemäß irgendeinem der Ansprüche 6 bis 9, wobei das Gewichtsverhältnis auf einer Säureäquivalentbasis des synthetischen Auxinherbizids zu dem einen oder den mehreren zweiten Herbizid(en) von 6.250:1 bis 1:4 beträgt.

11. Das Verfahren gemäß irgendeinem der Ansprüche 6 bis 10, wobei das synthetische Auxinherbizid ein 2,4-D-Organoammoniumsalz darstellt und das zweite Herbizid Haloxyfop-P-Methyl darstellt und das Gewichtsverhältnis auf einer Säureäquivalentbasis des 2,4-D-Organoammoniumsalzes zu Haloxyfop-P-Methyl von 30:1 bis 1:4 beträgt.

12. Das Verfahren gemäß irgendeinem der Ansprüche 6 bis 11, wobei das zweite Herbizid eine Mischung von Halauxifen-Methyl und Fluroxypyr-Meptyl, eine Mischung von Halauxifen-Methyl und Haloxyfop-P-Methyl oder eine Mischung von Halauxifen-Methyl und Isoxaben darstellt.

13. Die stabile wässrige herbizide Zusammensetzung gemäß irgendeinem der Ansprüche 1 bis 5 oder das Verfahren gemäß irgendeinem der Ansprüche 6 bis 12, des Weiteren umfassend einen landwirtschaftlich akzeptablen Hilfs- oder Trägerstoff und/oder einen Herbizid-Safener.

14. Das Verfahren gemäß irgendeinem der Ansprüche 6 bis 13, wobei die unerwünschte Vegetation in einer herbizidtoleranten Nutzpflanze kontrolliert wird, wobei die herbizidtolerante Nutzpflanze vorzugsweise einzelne, mehrere oder gestapelte Merkmale, die Toleranz gegenüber einer oder mehreren Herbizidchemikalie(n) und/oder Hemmern mit einer oder mehreren Wirkweisen verleihen, besitzt.

15. Das Verfahren gemäß Anspruch 14, wobei die unerwünschte Vegetation ein herbizidresistentes oder -tolerantes Unkraut umfasst.

## Revendications

1. Composition herbicide, aqueuse et stable, qui comprend :
a) un sel hydrosoluble d'un herbicide de type auxine synthétique, en une quantité représentant, par rapport à la composition totale, de 100 à 625 géa/L (grammes d'équivalent acide par litre),
b) un deuxième herbicide, en une quantité représentant, par rapport à la composition totale, de 0,1 à 400 géa/L d'un herbicide insoluble dans l'eau,
c) de 0 à 150 g/L, par rapport à la composition totale, d'au moins un tensioactif, ionique ou non-ionique,
d) de 0 à 500 g/L, par rapport à la composition totale, d'un solvant organique non-miscible à l'eau,
e) et de 200 à 800 g/L, par rapport à la composition totale, d'eau,
et dans laquelle le deuxième herbicide inclut un ester d'haloxyfop, un composé de formule 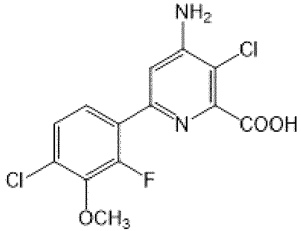 ou un ester d'alkyle en C₁-C₆ ou un sel d'un tel composé, ou un composé de formule suivante : 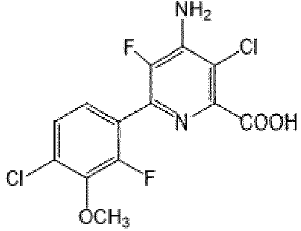 ou un ester d'alkyle en C₁-C₁₂ ou d'aryl-alkyle en C₇-C₁₂ ou un sel d'un tel composé,
laquelle composition forme une composition herbicide homogène, transparente et stable.

2. Composition herbicide, aqueuse et stable, conforme à la revendication 1, dans laquelle l'herbicide de type auxine synthétique est l'un des suivants : 2,4-D, 2,4-DB, aminocyclopyrachlore, aminopyralide, clopyralid, dicamba, MCPA, MCPB, piclorame, ou triclopyr, ou un mélange de ceux-ci.

3. Composition herbicide, aqueuse et stable, conforme à l'une des revendications 1 et 2, dans laquelle l'herbicide de type auxine synthétique comprend un ou plusieurs cation(s) de type organo-ammonium, étant entendu que, de préférence, ces cations de type organo-ammonium comportent de 1 à 12 atomes de carbone, et que, mieux encore, il s'agit de cations isopropyl-ammonium, diglycol-ammonium, diméthyl-ammonium, diéthyl-ammonium, triéthyl-ammonium, diméthyl-éthanol-ammonium, diéthanol-ammonium, triéthanol-ammonium, triisopropanol-ammonium, tétraméthyl-ammonium, choline ou N,N-bis(3-amino-propyl)-méthyl-ammonium, ou de mélanges de ces cations, et que surtout, il s'agit de cations diméthyl-ammonium, choline, diglycol-ammonium ou N,N-bis(3-amino-propyl)-méthyl-ammonium.

4. Composition herbicide, aqueuse et stable, conforme à l'une des revendications 1 à 3, dans laquelle le deuxième herbicide est de l'halauxifène-méthyl, un ester d'haloxyfop-P, de l'haloxyfop-P-méthyl, un composé de formule suivante : 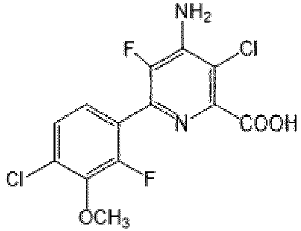 ou un ester d'alkyle en C₁-C₁₂ ou d'aryl-alkyle en C₇-C₁₂ ou un sel d'un tel composé, ou un mélange de ces composés.

5. Composition herbicide conforme à l'une des revendications 1 à 4, dans laquelle le deuxième herbicide est un mélange d'halauxifène-méthyl et d'haloxyfop-P-méthyl, un mélange d'halauxifèneméthyl et d'isoxabène, ou une combinaison d'halauxifène-méthyl et de fluoroxypyr-meptyl.

6. Procédé de lutte contre des végétaux indésirables, comprenant le fait de mettre ces végétaux ou une zone qui leur est adjacente, afin d'empêcher ces végétaux de lever ou de pousser, en contact avec une composition herbicide, utilisée en une quantité à effet herbicide et comprenant :
a) un sel hydrosoluble d'un herbicide de type auxine synthétique, en une quantité représentant, par rapport à la composition totale, de 100 à 625 géa/L,
b) un deuxième herbicide, en une quantité représentant, par rapport à la composition totale, de 0,1 à 400 géa/L,
c) de 0 à 150 g/L, par rapport à la composition totale, d'au moins un tensioactif, ionique ou non-ionique,
d) de 0 à 500 g/L d'un solvant organique non-miscible à l'eau,
e) et de 200 à 800 g/L, par rapport à la composition totale, d'eau,
dans laquelle le deuxième herbicide inclut un ester d'haloxyfop, un composé de formule 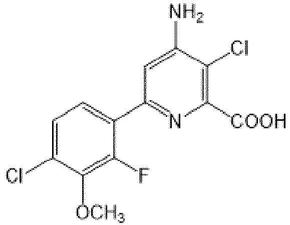 ou un ester d'alkyle en C₁-C₆ ou un sel d'un tel composé,
ou un composé de formule suivante : 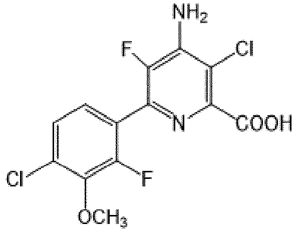 ou un ester d'alkyle en C₁-C₁₂ ou d'aryl-alkyle en C₇-C₁₂ ou un sel d'un tel composé,
étant entendu que la composition forme une composition herbicide homogène, transparente et stable.

7. Composition herbicide, aqueuse et stable, conforme à l'une des revendications 1 à 5, ou procédé conforme à la revendication 6, étant entendu que la composition herbicide ne donne aucun signe visible de séparation de phases après deux semaines de stockage à 54 °C.

8. Composition herbicide, aqueuse et stable, conforme à l'une des revendications 1 à 5, ou procédé conforme à l'une des revendications 6 et 7, étant entendu que la composition herbicide ne donne aucun signe visible de formation de cristaux après deux semaines de stockage dans des conditions où elle subit des cycles de congélation/décongélation entre -10 et 40 °C à raison d'un cycle toutes les 24 heures.

9. Procédé conforme à l'une des revendications 6 à 8, dans lequel le sel hydrosoluble de l'herbicide de type auxine synthétique comprend un ou plusieurs cation(s) de type organo-ammonium, étant entendu que, de préférence, ces cations de type organo-ammonium comportent de 1 à 12 atomes de carbone, et que, mieux encore, il s'agit de cations isopropyl-ammonium, diglycol-ammonium, diméthyl-ammonium, diéthyl-ammonium, triéthyl-ammonium, monoéthanolammonium, diméthyl-éthanol-ammonium, diéthanol-ammonium, triéthanol-ammonium, triisopropanol-ammonium, tétraméthyl-ammonium, tétraéthyl-ammonium, choline ou N,N-bis(3-amino-propyl)-méthyl-ammonium, ou de mélanges de ces cations, et que surtout, il s'agit de cations diméthyl-ammonium, choline, diglycol-ammonium ou N,N-bis(3-amino-propyl)-méthyl-ammonium.

10. Composition herbicide, aqueuse et stable, conforme à l'une des revendications 1 à 5, ou procédé conforme à l'une des revendications 6 à 9, dans laquelle ou lequel le rapport, en poids d'équivalent acide, de l'herbicide de type auxine synthétique au(x) deuxième(s) herbicide(s) vaut de 6250/1 à 1/4.

11. Procédé conforme à l'une des revendications 6 à 10, dans lequel l'herbicide de type auxine synthétique est un sel d'organo-ammonium de 2,4-D, le deuxième herbicide et de l'haloxyfop-P-méthyl, et le rapport, en poids d'équivalent acide, du sel d'organo-ammonium de 2,4-D à l'haloxyfop-P-méthyl vaut de 30/1 à 1/4.

12. Procédé conforme à l'une des revendications 6 à 11, dans lequel le deuxième herbicide est un mélange d'halauxifène-méthyl et de fluoroxypyr-meptyl, un mélange d'halauxifène-méthyl et d'haloxyfop-P-méthyl, ou un mélange d'halauxifène-méthyl et d'isoxabène.

13. Composition herbicide, aqueuse et stable, conforme à l'une des revendications 1 à 5, ou procédé conforme à l'une des revendications 6 à 12, étant entendu que la composition comprend en outre un adjuvant ou véhicule admissible en agriculture et/ou un agent phyto-protecteur anti-herbicide.

14. Procédé conforme à l'une des revendications 6 à 13, par lequel on lutte contre des végétaux indésirables dans une culture tolérant des herbicides, laquelle culture tolérant des herbicides porte de préférence un caractère isolé, plusieurs caractères ou un groupe de caractères qui lui confère(nt) une certaine tolérance vis-à-vis d'un ou de plusieurs type(s) chimique(s) d'herbicide et/ou d'inhibiteurs dotés d'un ou de plusieurs mode(s) d'action.

15. Procédé conforme à la revendication 14, dans lequel les végétaux indésirables comprennent une mauvaise herbe résistante à un herbicide ou tolérant un herbicide.
